(19) Europäisches Patentamt
European Patent Office
Office européen des brevets

(11) Publication number: **0 128 333**
**B1**

(12) # EUROPEAN PATENT SPECIFICATION

(45) Date of publication of patent specification: **13.09.89**

(51) Int. Cl.$^4$: **A 23 F 5/16**

(21) Application number: **84105033.9**

(22) Date of filing: **04.05.84**

(54) **Agent for inactivating the mutagenicity of coffee and method therefor.**

(30) Priority: **13.06.83 JP 105610/83**
**16.09.83 JP 170953/83**

(43) Date of publication of application:
**19.12.84 Bulletin 84/51**

(45) Publication of the grant of the patent:
**13.09.89 Bulletin 89/37**

(84) Designated Contracting States:
**AT BE CH DE FR GB IT LI LU NL SE**

(56) References cited:
**DE-A-2 709 390**
**FR-A-2 231 319**
**MUTATION RESEARCH, vol. 68, 1979, pages 101-106, Elsevier/North-Holland Biomedical Press, NL; M. NAGAO et al.: "Mutagens in coffee and tea"**
**AGRICULTURAL AND BIOLOGICAL CHEMISTRY, vol. 44, no. 4, 1980, pages 959-961; T. YAMAGUCHI et al.: "Desmutagenic activity of peroxidase on autoxidized linolenic acid"**

(73) Proprietor: **Suntory Limited**
**1-40 Dojimahama 2-chome Kita-ku**
**Osaka-shi Osaka-fu 530 (JP)**

(72) Inventor: **Suwa, Yoshihide**
**7-16, Yamatedai 6-chome**
**Ibaraki-shi Osaka (JP)**
Inventor: **Kobayashi, Takumi**
**1-10, Himuro-cho 1-chome**
**Takatsuki-shi Osaka (JP)**
Inventor: **Kiyota, Noriko**
**14-4, Aoyamadai 4-chome**
**Suita-shi Osaka (JP)**
Inventor: **Komatsubara, Sawako**
**6-31, Nagao-cho Sumiyoshi-ku**
**Osaka-shi Osaka (JP)**
Inventor: **Yoshizumi, Hajime**
**6-1-612, Kosobe-cho 2-chome**
**Takatsuki-shi Osaka (JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81 (DE)**

**EP 0 128 333 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

BANBURRY REP., vol. 17, 1984, pages 69-77; M. NAGAO et al.: "Mutagens in coffee"
FOOD SCIENCE & TECHNOLOGY ABSTRACTS, no. 71-12-C0236, (71061028); P. KESAVAN: "Cytotoxic and mutagenic effects of irradiated substances and food material".

CHEMICAL ABSTRACTS, vol. 93, 21st July 1980, page 261, no. 21203d, Columbus, Ohio, US.

**Description**

The present invention relates to an agent for inactivating the mutagenicity of coffee, and a method of providing a safe coffee beverage by inactivating its mutagenicity.

Most of the cancers that attack humans are said to originate from carcinogenic factors present in their living environment. Only about 2% of human cancers can be explained on a hereditary basis (Higginson, J. & Muir, C. S.: J. Natl. Cancer Inst., Vol. 63, 1291, 1979). Cancers now account for about one fourth to one fifth of the causes of human death, and there is a great accumulation of epidemiological data that supports the hypothesis that the foods and beverages we ingest every day may be the archcriminal of human cancers.

One of the methods for determining carcinogenicity that have recently been established is the Salmonella test (also known as the Ames test) that uses the requirement for histidine as an evaluation index (Ames, B. N. et al.: Mutation Res., Vol. 31, 347, 1975). Many research institutes checked the mutagenicity of compounds by the Ames test and have confirmed that the correlation of the result with their carcinogenicity is as high as 80 to 90% (McCann, J. et al.: Proc. Natl. Acad. Sci. (U.S.A.), Vol. 72, 5153, 1975).

Therefore, eliminating mutagens would be of great help in protecting humans from ye risk of cancer development. Furthermore, mutation is the result of damage to chromosomes and DNA, and mutagens will have certain adverse effects on human health even if they do not cause cancers. This is why foods and beverages that can be ingested without the fear of mutagenicity are desired in modern life.

Mutagens that have been proved to be present in foods and beverages include benzo(a)pyrene, aflotoxin $B_1$, 2-aminofluorenone, benz(a)anthracene, chrysene, dimethylnitrosoamine, β-naphthylamine, nitrosopyrrolidine and methylglyoxal, and many of these have been demonstrated to have carcinogenicity as well as mutagenicity. However, people are unable to do without common foods and beverages even if they have been proved to have mutagenicity, and putting a legal ban on their daily intake is certainly out of the question. A particular problem here is that tobacco and beverages that are daily taken in not for their nutritive values but for their refreshing and soothing effects often have higher levels of mutagenicity than daily foods and beverages, as shown in Table 1 below.

TABLE 1

| Name | No. of revertant colonies* |
|---|---|
| one cigarette | 5,500 (TA 98, +**) |
| a cup of instant coffee (150 ml) | 45,000 (TA 100, −) |
| a cup of regular coffee (150 ml) | 195,000 (TA 100, −) |
| a cup of black tea (150 ml) | 38,000 (TA 100, −) |
| a cup of green tea (150 ml) | 21,000 (TA 100, −) |
| a cup of *sench* | 17,000 (TA 100, −) |

**Salmonella typhimurium* strain TA 100 or TA 98 was used.

** + indicates the presence of a rat liver homogenate (S9 mix) and–indicates the absence of the mix.

In fact, several researchers have reported some degree of correlation between tobacco and cancers of the mouth, pharynx, larynx, esophagus, stomach and lungs, between coffee and cancers of the pancreas and bladder, and between alcoholic beverages and cancers of the esophagus and liver.

The present invention provides a method of eliminating or attenuating the mutagenicity of foods and beverages, thereby increasing their safety and even restoring the confidence that they can be ingested without causing any hazard to human health.

According to the literature, the history of coffee as a daily beverage started in Arabia in the 14th century. Since then, the demand for coffee as a daily beverage has increased as human society has become more and more sophisticated. In Japan, too, the consumption of coffee has seen a triple increase in the period between 1969 and 1979.

However, several scientists have recently cast doubt on the safeness of coffee and this is at least partly responsible for the relatively low U.S. consumption of coffee in 1982. The finding of cytotoxicity of caffeine and its correlation with cancers created a great sensation in coffee-drinking countries such as the U.S.A. and European countries. A paper that aroused special concern was that of Dr. MacMahon who confirmed the correlation between the habit of coffee drinking and cancer of the pancreas (MacMahon, B. et al.: N,

Engl. J. Med., Vol. 304, 630, 1981). Inferior urinary organs such as the bladder are other organs in which the incidence of cancer is increased as a result of coffee drinking (Simon, D. et al.: J. Natl. Cancer Inst., Vol. 54, 587, 1975). There are also reports that coffee increases the chance of development of leukemia and cancers of the prostate and ovary. In any event, further studies have to be made on the correlation of coffee and its carcinogenicity.

As shown in Table 1 above, the mutagenicity of coffee is strikingly higher than that of other beverages and even tobacco. Since coffee is a favorite beverage for many people and its current consumption is high, top priority should be given to eliminating from coffee every possible hazard to human health. Many researchers have made studies in this respect and have produced impressive results. For examples, peroxidase, thiol compounds and selenium compounds have been reported to have the ability to inactivate the mutagenicity of Trp-P-1, N - methyl - N' - nitro - N - nitrosoguanidine and 7,12 - dimethylbenzanthracene, respectively (Martin, S. E. et al.: Mutation Res., Vol. 82, 41, 1981). However, many of the inactivators known today are either toxic to the living body or unsuitable for daily intake due to their poor palatability.

FR—A—2231319 discloses that coffee treated with an agent comprising a peroxidase and a peroxide reduces the adverse reactions in some people to coffee. However, there is no further explanation of what these adverse reactions may be.

Mutation Research Vol. 68, 1979, pp 101—106 discloses that microsomal enzymes found in rat-liver S9 mix inactivate the mutagenicity present in coffee. However, there is no disclosure of the actual enzyme responsible for the inactivation.

It will certainly be necessary for safeguarding human health that coffee be freed of its cytotoxicity or mutagenicity by using a substance that can be taken in every day without causing any hazard to the human and without impairing the characteristic taste and flavor of the coffee.

In order to meet this requirement, we have made various studies and have found that a certain enzyme is highly effective in inactivating the mutagenicity and cytotoxicity of coffee. The present invention is based on this finding.

Dicarbonyl compounds typified by methylglyoxal and diacetyl have been considered to be responsible for the mutagenicity of coffee (L. F. Bjeldanes and H. Chew: Mutation Res., Vol. 67, 367, 1979, and H. Kasai et al: Gann, Vol. 73, 687, 1982). However, we postulated that free radicals or organic radicals would be either directly or indirectly involved in the mutagenicity of coffee, and as a result of intensive efforts to verify that postulation, we have found that such radicals can be effectively removed by two enzymes, i.e., catalase and peroxidase.

As Table 2 shows, coffee and methylglyoxal behave differently in their reaction with L-cysteine (Cys), dithiothreitol (DTT), reduced glutathione (GSH) and catalase. This means that the greater part of the mutagenicity of coffee cannot be explained by dicarbonyl compounds alone.

TABLE 2

| Additive (conc.) | Mutagenicity (%) | |
|---|---|---|
| | Methylglyoxal* | Coffee** |
| — | 100 | 100 |
| $HSO_3$— (3.75 μM) | 0 | 0 |
| Cys (4 μM) | 0 | 100 |
| DTT (4 μM) | 0 | 100 |
| GSH (4 μM) | 0 | 100 |
| catalase (7.5 units) | 100 | 10 |

* 0.2 μM (equivalent to 715 revertant colonies/plate)
** 15 mg of soluble coffee/plate (equivalent to 386 revertant colonies/plate)

Fig. 1 is a graph showing the ability of catalase to inactivate the mutagenicity caused in *Salmonella typhimurium* strain TA 100 (hereunder S. TA 100) by regular coffee.

Fig. 2 is a graph showing the ability of catalase in activative the mutagenicity caused in S. TA 100 by instant coffee.

Fig. 3(a) is a bar graph showing the cytotoxicity of three types of coffee against Chinese hamster lung fibrolasts (CHL cells), wherein the concentrations of each type of coffee and catalase are 10 mg/ml and 500 units/ml, respectively.

Fig. 3(b) is a graph showing the ability of catalase to eliminate the cytotoxicity of instant coffee to intestinal cells of normal human fetus (Flow 11000). In Fig. 3(b), the curve connecting solid dots indicates data for untreated coffee; and the curve connecting open dots indicates data for coffee containing catalase (500 units/ml).

Figs. 4(a) and (b) are graphs showing the ability of peroxidase to inactivate the mutagenicity of regular coffee and commercial instant coffee, respectively.

Fig. 5 is a graph showing the ability of peroxidase to inactivate the mutagenicity of instant coffee in the presence of hydrogen peroxide. In Fig. 5, the * indicates the mutagenicity level of untreated instant coffee (neither autoclaved nor incorporated with peroxidase or hydrogen peroxide), and the curve connecting solid dots indicates the mutagenicity profile of instant coffee (15 mg/plate) that contained 15 units/plate of peroxidase and which was autoclaved at 120°C for 10 minutes.

The enzyme used in the present invention to inactivate the mutagenicity and cytotoxicity of coffee is catalase or peroxidase in combination with a pharmaceutically acceptable carrier. A particularly good result can be obtained by using peroxidase in combination with hydrogen peroxide.

Catalase (hydrogen-peroxide:hydrogen-peroxide oxidoreductase, EC 1.11.1.6) decomposes hydrogen peroxide by the following reaction scheme:

$$2H_2O_2 \xrightarrow{\text{catalase}} 2H_2O+O_2$$

$$ROOH+AH_2 \xrightarrow{\text{catalase}} H_2O+ROH+A.$$

This enzyme also catalyzes the oxidation of alcohol or formic acid in the presence of hydrogen peroxide. Catalase is found in all animals, plants and microorganisms other than anaerobic bacteria and are considered to decompose and render harmless the hydrogen peroxide produced in the body of the living organisms in an aerobic environment. The molecular weight of the catalase ranges from 220,000 to 250,000. For more details of the catalase, see Y. Tsujisaka et al. (ed.): "Applied Enzymology", Kodansha, 1979).

Peroxidase (donor:$H_2O_2$-oxidoreductase, EC 1.11.1.7) decomposes hydrogen peroxide in the presence of a hydrogen donor according to the following scheme:

$$\text{donor}+H_2O_2 \xrightarrow{\text{peroxidase}} \text{oxidized donor}+2H_2O.$$

Peroxidase may derive from plants (e.g. horseradish, Japanese radish and turnip), and animals (in the form of, say, cow milk and leukocytes). Pure peroxide isolated from these substances, as well as crude products obtained in the respective steps of purification may be used.

Peroxidase has been proved to have the ability to suppress the mutagenicity of the following substances: Trp-P-1 and Trp-P-2 (both are heat decomposition products of tryptophan), Glu-P-1 (heat decomposition product of glutamic acid) and 2-amino-α-carboline (heat decomposition product of globulin) as reported in M. Yamada et al.: B.B.R.C., Vol. 90(3), 769—776, 1979); autoxidated linolenic acid as reported in T. Yamaguchi et al.: Agric. Biol. Chem., Vol. 44(4), 959—961, 1980; and 2-aminoanthracene, heat decomposition product of tryptophan, ethidium bromide and heat decomposition product of ornithine as shown in H. Yamada et al., Japanese Patent Laid-Open No. 37180-80. The mutagenic behavior of these substances has also been found to differ from that of coffee. For example, Trp-P-1, Trp-P-2 and 2-amino-α-carboline cause a frame-shifted mutation whereas coffee induces a base-substituted mutation. Therefore, the mutagenicity of coffee cannot be explained by any of the substances listed above. The idea of the present invention to eliminate the mutagenicity of coffee with the aid of peroxidase is an entirely new finding that is not disclosed in any prior art reference.

The amount of catalase or peroxidase required to eliminate the mutagenicity or cytotoxicity of coffee is in the range of 0.1 to 10 units, preferably at least 5 units, for 1 ml of a coffee beverage having a concentration normal to ordinary persons (5—20 mg of coffee powder per ml). If hydrogen peroxide is used together with peroxidase when the latter is caused to act on coffee, irreversible reduction or inactivation of the mutagenicity and cytotoxicity of coffee can be realized. By the term "irreversible" is meant that the coffee treated with peroxidase in the presence of $H_2O_2$ will not cause another development of mutagenicity even if it is heated in a subsequent step. For practical purposes, it is convenient to incorporate hydrogen peroxide in a coffee solution together with peroxidase. Suitably, the hydrogen peroxide is used in an amount of 1 to 35 μM for 15 mg of coffee powder.

Alternatively, the irreversible inactivation of the mutagenicity can be achieved by leaving a coffee-catalase or -peroxidase preparation to stand at a temperature below 80°C, preferably below 70°C for a sufficient period of time to irreversibly inactivate the mutagenicity. For example, when the preparation comprises 15 mg of coffee powder/ml and 10 units of the enzyme/ml, it is sufficient to let it stand at 20°C for 1.5—2.0 hours for the irreversible inactivation.

The catalase or peroxidase according to the present invention may be added to coffee in various

methods; it may be blended with roasted, either milled or unmilled, coffee beans (to make regular coffee), or it may be added to the coffee solution extracted from roasted coffee beans (to make liquid coffee or canned coffee), or it may be added to the extract from coffee beans and reduced to particles (to make instant coffee), or it may be uniformly mixed with a spray-dried or freeze-dried coffee powder or a liquid form of the enzyme is sprayed onto a coffee powder (to make instant coffee by fluidized bed granulation).

The catalase or peroxidase according to the present invention is worked into a suitable form of preparation and may be incorporated in various types of coffee beverage or added to the in-process material at any stage of the manufacture of coffee beverages.

The advantages of the present invention will become apparent by reading the following examples, to which the scope of the invention is by no means.

Example 1

I) Measuring mutagenicity and the antimutagenic effect

(i) Method:

The preincubation method described in Sugimura & Nagao; Chemical Mutagens, Vol. 6, p. 41, 1981 was used.

(ii) Microorganism:

Histidine-requiring *Salmonella typhimurium* strain TA 100 (hereunder S. TA 100) was used.

(iii) Preparation of samples:

(a) Instant coffee:

Instant coffee powder was dissolved in distilled water. Predetermined amounts of catalase were also dissolved in distilled water, and 50 µl of each solution was mixed with an equal amount of the aqueous coffee solution.

(b) Regular coffee:

Roasted and ground coffee beans (20 g) were extracted with hot distilled water (250 ml), and the extract was filtered through coffee filter paper No. 12 manufactured by Kalita Co., Ltd. The extract was freeze-dried, and after measuring the weight of the dry product, it was dissolved in distilled water. Predetermined amounts of catalase were also dissolved in distilled water, and 50 µl of each solution was mixed with an equal amount of the aqueous solution of coffee concentrate.

(c) Catalase:

A pure isolate from calf liver as manufactured by P-L Biochemicals, Inc. was used. Its activity was 150,000 units/ml (20,000 units/mg).

(iv) Measurement of mutagenicity:

To 100 µl of each of the samples prepared in (iii)(a) to (c), 500 µl of 0.1 M sodium phosphate buffer (pH 7.4) plus 100 µl of a culture of S. TA 100 were added. After shaking at 37°C for 20 minutes, each mixture was dissolved in 2 ml of a soft agar solution and spread on a 0.1% glucose agar plate. The soft agar had been supplemented with 0.1 µM/2 ml soft agar/plate of histidine so as to cause several division of cells on the plate. After incubation at 37°C for 48 hours, the number of colonies forming on the plate was counted as revertants. The percent inhibition of mutagenicity can be calculated by the following formula, if necessary:

$$\text{Percent inhibition}=\left(1-\frac{\text{Number of colonies on plate containing wheat germ preparation}}{\text{Number of colonies on untreated plate}}\right)\times 100\ (\%)$$

(v) Measurement of cytotoxicity:

Chinese hamster lung fibroblasts or CHL cells ($5\times10^4$) were transferred onto VAMEM or an MEM medium supplemented with vitamins, amino acids and 10% fetal bovine serum, and incubation was made at 37°C for 48 hours in 5% $CO_2$ atmosphere. A flat-bottom (5.5 $cm^2$) tube was used as an incubator. The medium was treated for 3 hours with 1 ml of VAMEM containing 3.5% fetal bovine serum with predetermined concentrations of coffee in distilled water. After the treatment with coffee, the CHL cells were washed once with VAMEM and twice with a phosphate buffer (135 mM NaCl, 2.7 mM KCl, 5.3 mM $Na_2HPO_4$, and 1.45 mM $KH_2PO_4$). The cells were removed by treatment with trypsin, and 200 to 400 cells of them were transferred to a petri dish (60 mm$^\Phi$) and incubated in 5 ml of VAMEM containing 10% bovine embryonic serum. The plating efficiency was checked on the 7th day of the incubation.

Fetal human intestinal cells (Flow 11000; $3\times10^5$ cells) were transferred onto MEM (Hanks) medium supplemented with 10% fetal bovine serum FBS, and were incubated at 37°C overnight in 5% $CO_2$ atmosphere. Then, the medium was changed to MEM (Earle) medium supplemented with 10% FBS, and the cells were further incubated for 48 hours. The cells were treated for 3 hours with predetermined concentrations of sample, and were incubated overnight in MEM (Hanks) medium supplemented with 10% FBS after being washed with MEM (Earle) medium. Then, the cells were washed again with MEM (Earle)

medium, and were treated with 0.25% trypsin. After the centrifugation at 1,000 g for 5 minutes in MEM (Earle) medium supplemented with 10% FBS, the cells were stained with 0.15% trypan blue in MEM (Earle) medium supplemented with 5% FBS. Surviving cells and dead cells were counted with microscopy.

The percent survival of the cells was determined by the following formula:

$$\text{Percent survival} = \frac{\text{Plating efficiency of treated cells}}{\text{Plating efficiency of untreated cells}} \times 100\ (\%)$$

(vi) Measurement of the concentration of hydrogen peroxide in coffee:

The concentration of hydrogen peroxide in coffee was determined by measuring the concentration of oxygen which was generated from catalase-treated hydrogen peroxidase as shown in the following reaction.

$$2H_2O_2 \xrightarrow{\text{catalase}} 2H_2O + O_2$$

Electrode for oxygen (Type DG-5) and reaction system (Type BOM-11) were obtained from Ishikawa Seisaku-sho Ltd. Catalase prepared from bovine liver was purchased from P-L Biochemicals, Inc., U.S.A. The method we used was able to detect as little as 0.2 ppm of hydrogen peroxide. However, the method of detecting it by measuring the amount of iodide released from potassium iodide in the presence of molybdate ion could hardly detect even 30 ppm of hydrogen peroxide.

II) Results

(i) Efficacy of catalase against the mutagenicity of coffee:

(a) Regular coffee:

A powder of extracted coffee beans (15 mg) as prepared by the method shown in I)(iii)(b) was dissolved in distilled water to make 50 µl. Predetermined amounts of catalase were dissolved in distilled water to make a total of 50 µl, and each solution was mixed with the aqueous solution of coffee extract. After leaving the mixture to stand at room temperature for 20 minutes, 0.5 ml of 0.1 M sodium phosphate buffer (pH 7.4) and 0.1 ml of a culture of S. TA 100 were added sequentially. The mutagenicity of each mixture was determined by the method shown in I)(iv). The results are shown in Fig. 1.

As is clear from Fig. 1, the mutagenicity of regular coffee could be completely inactivated by adding 20 units of catalase to 1 mg of the extracted coffee powder. Theoretically, 0.5 units of catalase is sufficient to achieve the complete inactivation of 1 mg of coffee powder.

(b) Instant coffee:

Samples of commercial soluble instant coffee (1.5 mg, 3.75 mg, 7.5 mg, 11.25 mg and 15.0 mg) were dissolved in distilled water to make solutions each weighing 50 µl.

Predetermined amounts of catalase were also dissolved in distilled water to make 50 µl, and each solution was mixed with the aqueous coffee solutions. To each mixture, 0.1 M phosphate buffer (pH 7.4) and 100 µl of a culture of S. TA 100 were added, and the mutagenicity of instant coffee was determined as in (a). The results are shown in Fig. 2.

As in the case of regular coffee, the mutagenicity of instant coffee was markedly reduced or completely eliminated by addition of catalase. The mutagenicity of instant coffee could be completely inactivated by incorporating 15 units of catalase in 1 mg of soluble coffee.

The once inactivated mutagenicity of coffee, whether regular or instant type, did not revive upon addition of S9 mix, or the combination of 9000-g supernatant of rat liver homogenate and a reduced nicotinic acid amide adenine dinucleoside (NADPH) producing system.

(ii) Cytotoxicity of coffee as suppressed by catalase:

The cytotoxicity of three different types of coffee (standard instant type, decaffeinated instant type and regular type) against CHL cells was examined by the method shown in I)(v). As shown in Fig. 3(a), each type of coffee having a concentration of 10 mg/ml on a dry basis killed 99.9% or 100% of the CHL cells. However, 57.3% to 68.1% of the cells survived when 500 units of catalase was added to 1 ml of coffee.

This elimination of cytotoxicity was confirmed also in normal human intestinal cells (Flow 11000). As shown in Fig. 3(b), more than 90% of human cells died at the concentration of 10 mg coffee powder/ml. The addition of catalase (10 units/ml of coffee) showed the ability to detoxify the cytotoxicity of coffee markedly.

The coffee samples which were treated with catalase to reduce or eliminate their mutagenicity or cytotoxicity retained the characteristic taste and flavor. Furthermore, catalase will be a useful inactivator since it is indispensable to living organisms as an enzyme that protects them from cell damage caused by active oxygen.

Example 2

The procedure of Example 1 was repeated using the following three peroxidase preparations.

(1) Peroxidase (derived from horseraddish; activity: 100—150 units/mg; product of Wako Pure Chemical Industries, Ltd., Osaka, Japan).

(2) Glutathione peroxidase (derived from bovine erythrocytes; activity: 0.5 unit/mg; product of Boehringer, Mannheim-Yamanouchi Co., Ltd., Tokyo, Japan).

(3) Lactoperoxidase (derived from cow milk; activity: 40 units/mg; product of P-L Biochemicals, Inc., Wisconsin, U.S.A.).

(i) Efficacy of peroxidase against the mutagenicity of coffee:

(a) Regular coffee:

A powder of extracted coffee beans (15 mg) as prepared by the method shown in Example 1, I)(iii)(b) was dissolved in distilled water to make 50 µl. Predetermined amounts (0.03—15 units) of peroxidase were suspended or dissolved in distilled water to make a total of 50 µl, and each solution was mixed with the aqueous solution of coffee extract. After leaving the mixture to stand at room temperature for 20 minutes, 0.5 ml of 0.1 M sodium phosphate buffer (pH 7.4) and 0.1 ml of a culture of S. TA 100 were added sequentially. The mutagenicity of each mixture was determined by the method shown in Example 1, I)(iv). The results are shown in Fig. 4(a).

The mutagenicity of regular coffee could be substantially or completely inactivated by adding 0.4 unit of peroxidase to 15 mg of the extracted and freeze-dried coffee powder. In Fig. 4(a), the number of revertant colonies did not reach zero, but under the conditions used, 104 spontaneous revertants formed (as control) and this number is too small to demonstrate the occurrence of mutagenicity at a significant level. In microbiology, figures less than 200% of that for the control are not "significant". Therefore, in interpreting the data of Fig. 4(a), three cases where the number of revertants was 103 or less per plate were taken as having no significant difference from zero. The same criterion was used in the following experiments.

(b) Instant coffee:

The antimutagenic effect of peroxidase against commercial soluble coffee powders was checked by the same method as used for regular coffee. The results are shown in Fig. 4(b).

As in the case of regular coffee, the mutagenicity of instant coffee was markedly reduced or completely inactivated by addition of peroxidase. The mutagenicity of instant coffee could be substantially or completely inactivated by adding 0.225 unit of peroxidase to 15 mg of soluble coffee.

The once inactivated mutagenicity of coffee, whether regular or instant type, did not revive upon addition of S9 mix, or the combination of a 9000-g supernatant of rat liver homogenate and a reduced nicotinic acid amide adenine dinucleoside (NADPH) producing system.

(ii) Effect of addition of hydrogen peroxide:

As shown in (i), the mutagenicity of coffee can be reduced by addition of peroxidase. However, we found that some of the treated coffee samples became mutagenic again when they were subjected to heat temperature (e.g. autoclaving at 120°C for 20 minutes).

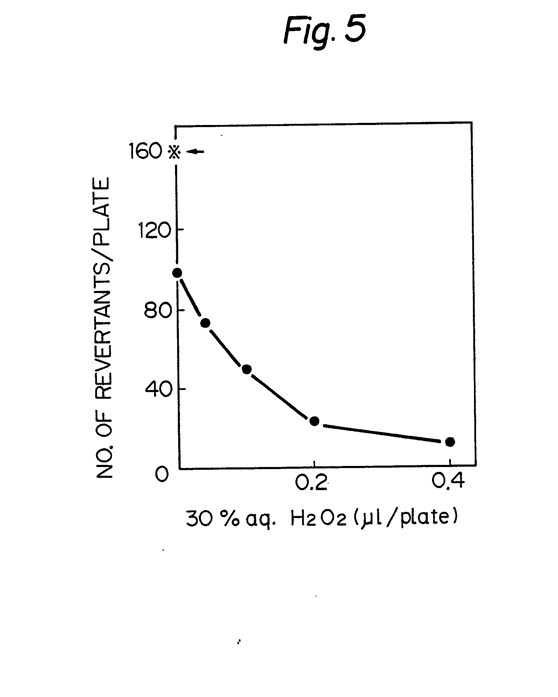

As a result of various studies made on the way to cause irreversible inactivation of the mutagenicity of coffee, we have found that use of hydrogen peroxide in combination with peroxidase is effective, as is clear from Fig. 5. When a coffee sample containing peroxidase was autoclaved, it resumed mutagenicity, the level of which was about 62% of that of an untreated coffee (neither autoclaved nor containing peroxidase or aqueous hydrogen peroxide). However, when 3.5 µM of hydrogen peroxide (equivalent to 0.4 µl of 30% aqueous $H_2O_2$ per plate) was added to 15 mg of soluble coffee together with peroxidase, the mutagenicity of the coffee was eliminated and remained inactive even after it was autoclaved at 120°C for 20 minutes. The incorporated hydrogen peroxide can be removed at a suitable stage of coffee manufacture, for example, when the coffee extract is spray-dried or freeze-dried to form particles.

(iii) Cytotoxicity of coffee treated with peroxidase or with both peroxidase and hydrogen peroxide:

Samples containing 1 unit of peroxidase with or without 235 nM of hydrogen peroxide for 1 mg of coffee powder were freeze-dried and dissolved in distilled water to give predetermined concentrations. Each solution was aseptically passed through a membrane filter (pore size: 0.45 µm) and checked for its cytotoxicity against CHL cells by the method shown in Example 1, I)(v). The results are shown in Table 3(a).

TABLE 3

| Coffee (mg/ml) | Peroxidase (units) | $H_2O_2$ (nM) | Percent survival |
|---|---|---|---|
| 0 | 0 | 0 | 100 |
| 1 | 0 | 0 | 39 |
| 2 | 0 | 0 | 17 |
| 4 | 0 | 0 | 2 |
| 0 | 4 | 0 | 100 |
| 1 | 1 | 0 | 62 |
| 2 | 2 | 0 | 58 |
| 4 | 4 | 0 | 2 |
| 0 | 0 | 940 | 100 |
| 1 | 1 | 235 | 115 |
| 2 | 2 | 470 | 53 |
| 4 | 4 | 940 | 26 |

As the above data shows, the cytotoxicity of coffee against CHL cells was reduced by addition of peroxidase either alone or in combination with hydrogen peroxide. For example, with an untreated coffee solution having a concentration of 2 mg/ml, only 17% of the CHL cells survived. But for a coffee solution of the same concentration which was treated with 2 units/ml of peroxidase, 58% of the cells survived, and a 53% survival was achieved by containing 2 units/ml of peroxidase and 470 nM/ml of hydrogen peroxide.

There was no significant difference in antimutagenic effect among the three types of peroxidase tested. In order to inhibit the mutagenicity of 15 mg of soluble coffee powder, the peroxidase prepared from horseraddish, the glutathione peroxidase prepared from bovine erythrocytes and the lactoperoxidase prepared from cow milk had to be used in the respective amounts of 0.3, 0.25 and 0.5 unit.

The coffee solutions that were treated with peroxidase in the presence or absence of hydrogen peroxide so as to reduce or eliminate their mutagenicity and cytotoxicity retained their characteristic taste and flavor satisfactorily.

Generation of hydrogen peroxide in coffee and its removal.

We detected hydrogen peroxide in freshly-brewed and instant coffee by the method described in I)(vi). As shown in Table 4, all brands of coffee showed the presence of hydrogen peroxide. Hydrogen peroxide was generated immediately after pouring water onto coffee powder, and its amount increased rapidly within one hour. The maximum concentration reached in 2—3 hours after pouring water. Maximum levels were 30—50 ppm in coffee made in the ordinary way (5—15 mg dry weight/ml). Under anaerobic conditions, hydrogen peroxide did not appear.

The generation of hydrogen peroxide seems to be $O_2$-dependent and a higher degree of roasting enhance its concentration. Hydrogen peroxide is mutagenic (160 revertants/$10^8$ survivors/μmole) to S. TA 100, and is also mutagenic to *Neurospora crassa* (C. Auerbach and D. Ramsey: Mol. Gem. Genet., Vol. 117, 1—13, 1972), and is clastogenic to human cells (A. Tonomura: Proc. E.M.S. Japan, 33, 1981). As for carcinogenicity, 0.1% of hydrogen peroxide proved to cause malignant tumors in mouse deodenum (A. Ito et al.: Gann, Vol. 73, 315—322, 1982).

The addition of 10 units of catalase of 0.2 units of peroxidase per ml of coffee completely eliminated hydrogen peroxide in coffee. Therefore, we believe it desirable to add the enzyme to coffee for the purpose of eliminating human hazards which are mutagens, clastogens, cytotoxic substances and carcinogens.

TABLE 4

| Coffee | Hydrogen peroxide*** µM (ppm) |
|---|---|
| Regular type* | |
| Cinnamon | 168 (5.7) |
| Medium-High | 266 (9.0) |
| Full-City | 507 (17.2) |
| Instant type** | |
| Brand 1 | 240 (8.2) |
| 2 | 168 (5.7) |
| 3 | 156 (5.3) |
| 4 | 145 (4.9) |
| 5 | 183 (6.2) |
| 6 | 8 (0.3) |
| 7 | 96 (3.3) |

* 16.2 mg dry weight/ml: Cinnamon
18.3 mg dry weight/ml: Medium-High
19.3 mg dry weight/ml: Full-City
** 15 mg powder/ml
*** Hydrogen peroxide was measured at 5 minutes after pouring water.

As will be apparent from the foregoing description, the mutagenicity of coffee can be reduced or eliminated by mixing it with catalase or peroxidase according to the present invention. The cytotoxicity of coffee can also be reduced by the addition of such enzyme to coffee. The taste and flavor of coffee beverage will not be impaired by the addition of the enzyme.

## Claims

1. A method of inactivating the mutagenicity of coffee comprising the step of treating a coffee beverage or an in-process material at any stage of the manufacture of a coffee beverage with an agent comprising 0.1 to 10 units of peroxidase per ml of the coffee beverage.

2. A method according to claim 1 wherein the agent further comprises hydrogen peroxide.

3. A method of inactivating the mutagenicity of coffee comprising the step of treating a coffee beverage of an in-process material at any stage of manufacture of a coffee beverage with a composition comprising 0.1 to 10 units of catalase per ml of the coffee beverage and a pharmaceutically acceptable carrier.

## Patentansprüche

1. Verfahren zum Inaktivieren der Mutagenizität von Kaffee, das den Schritt umfasst, in dem ein Kaffeegetränk oder ein Prozessmaterial in jedem beliebigen Stadium der Herstellung eines Kaffeegetränkes mit einem Mittel behandelt wird, das 0,1 bis 10 Einheiten Peroxidase pro ml des Kaffeegetränkes umfasst.

2. Verfahren nach Anspruch 1, wobei das Mittel weiterhin Wasserstoffperoxid umfasst.

3. Verfahren zum Inaktivieren der Mutagenizität von Kaffee, das den Schritt umfasst, in dem ein Kaffeegetränk oder ein Prozessmaterial in jedem beliebigen Stadium der Herstellung eines Kaffeegetränkes mit einer Zusammensetzung behandelt wird, die 0,1 bis 10 Einheiten Katalase pro ml des Kaffeegetränkes und einen pharmazeutisch verträglichen Träger umfasst.

## Revendications

1. Procédé pour inactiver la mutagénicité du café, comprenant l'étape consistant à traiter une boisson au café ou une matière en cours de transformation à n'importe quel stade de la fabrication d'une boisson au café par un agent comprenant 0,1 à 10 unités de peroxydase par ml de la boisson au café.

2. Procédé selon la revendication 1, dans lequel l'agent comprend de plus du peroxyde d'hydrogène.

3. Procédé pour inactiver la mutagénicité du café, comprenant l'étape consistant à traiter une boisson au café ou une matière en cours de transformation à n'importe quel stade de la fabrication d'une boisson au café par une composition comprenant 0,1 à 10 unités de catalase par ml de la boisson au café et un support pharmaceutiquement acceptable.

*Fig. 1*

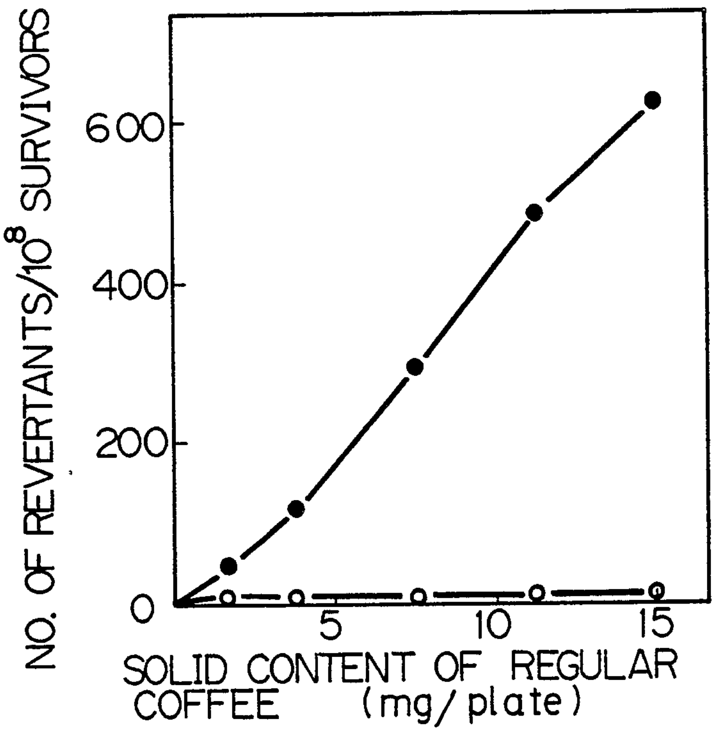
NO. OF REVERTANTS/$10^8$ SURVIVORS
600
400
200
0
5
10
15
SOLID CONTENT OF REGULAR COFFEE (mg/plate)

*Fig. 2*

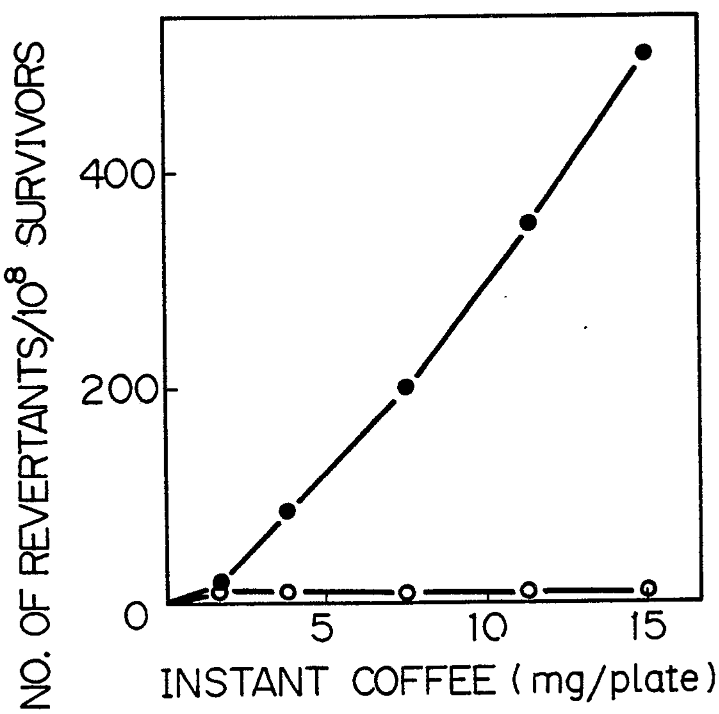
NO. OF REVERTANTS/$10^8$ SURVIVORS
400
200
0
5
10
15
INSTANT COFFEE (mg/plate)

Fig. 3(a)

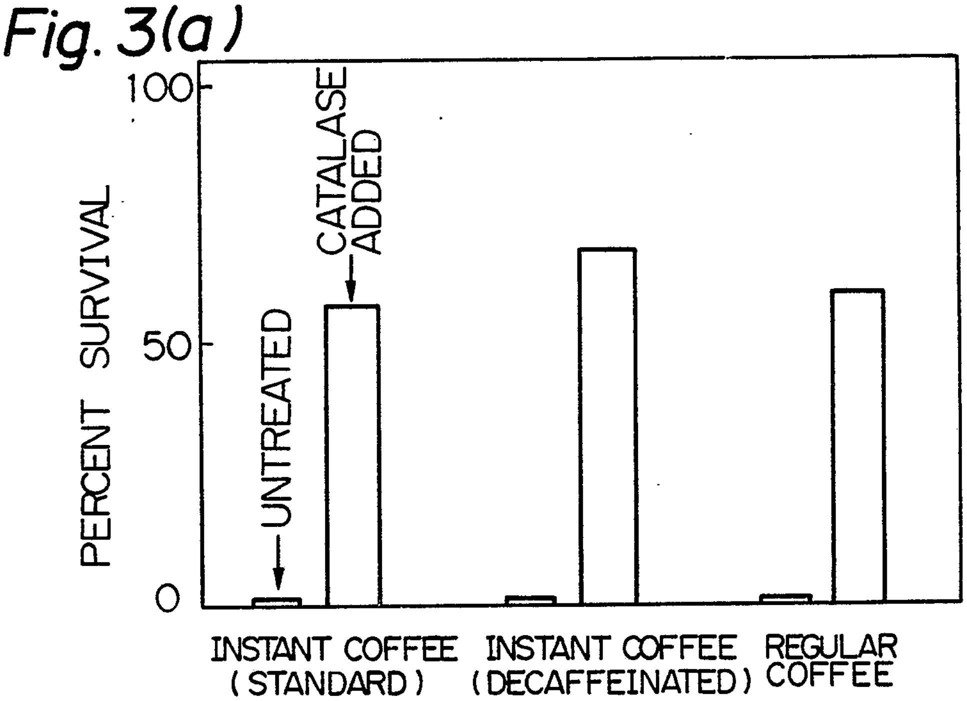
100
50
0
PERCENT SURVIVAL
UNTREATED
CATALASE ADDED
INSTANT COFFEE (STANDARD)
INSTANT COFFEE (DECAFFEINATED)
REGULAR COFFEE

Fig. 3(b)

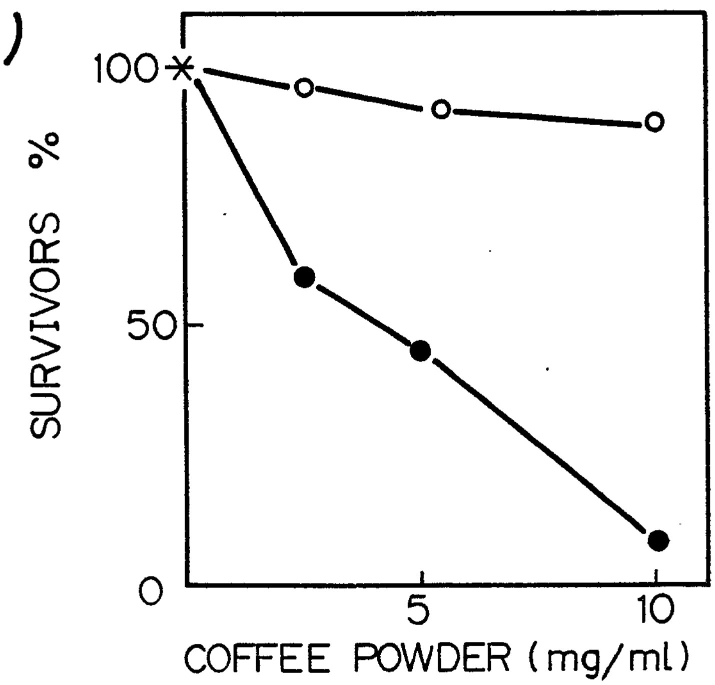
100
50
0
SURVIVORS %
5
10
COFFEE POWDER (mg/ml)

Fig. 4(a)

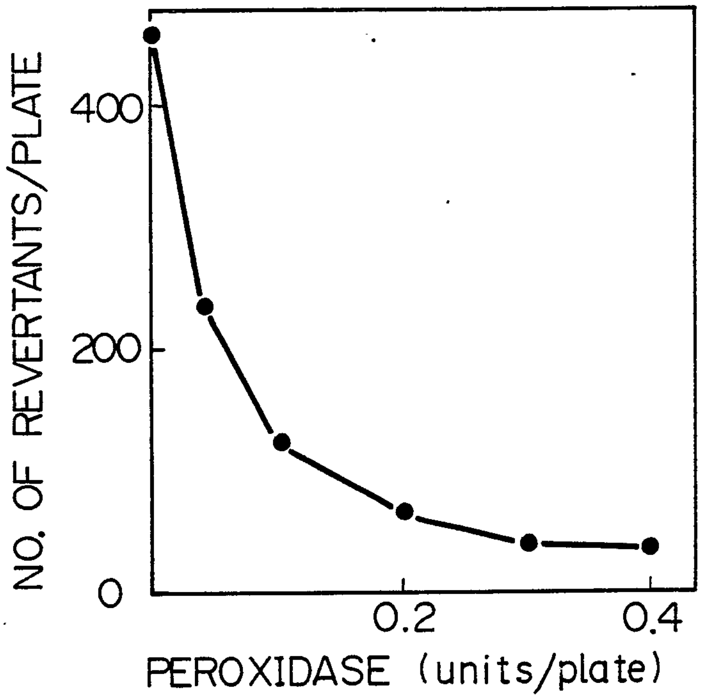
NO. OF REVERTANTS/PLATE
400
200
0
0.2
0.4
PEROXIDASE (units/plate)

Fig. 4(b)

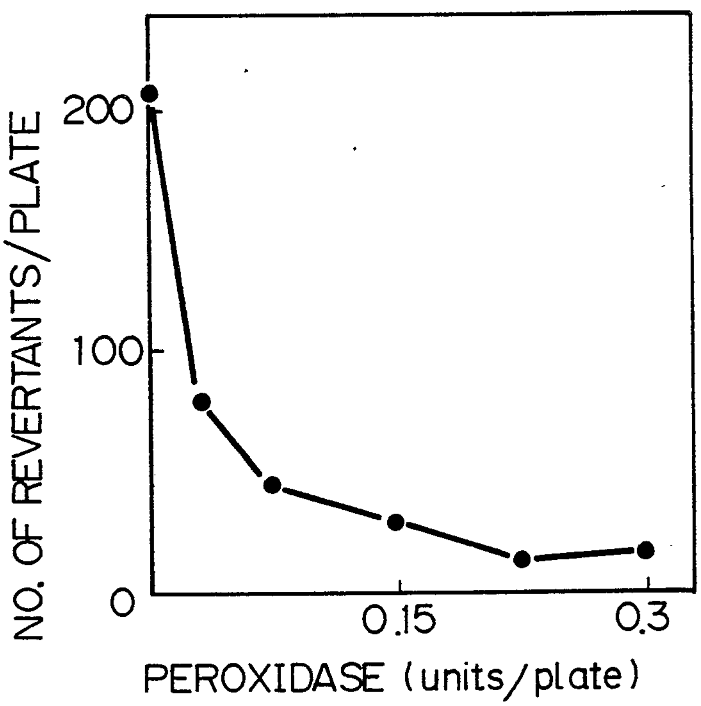
NO. OF REVERTANTS/PLATE
200
100
0
0.15
0.3
PEROXIDASE (units/plate)

*Fig. 5*